Europäisches Patentamt

European Patent Office

Office européen des brevets

(11) Veröffentlichungsnummer: **0 363 677**

**A2**

(12) **EUROPÄISCHE PATENTANMELDUNG**

(21) Anmeldenummer: **89117159.7**

(22) Anmeldetag: **16.09.89**

(51) Int. Cl.⁵: **G06F 15/70 , H04N 7/137**

(30) Priorität: **11.10.88 DE 3834477**

(43) Veröffentlichungstag der Anmeldung:
**18.04.90 Patentblatt 90/16**

(84) Benannte Vertragsstaaten:
**AT CH DE ES FR GB IT LI SE**

(71) Anmelder: **ROBERT BOSCH GMBH**
**Postfach 10 60 50**
**D-7000 Stuttgart 1(DE)**

(72) Erfinder: **Krage, Heinz-Joseph**
**Gerlandstrasse 38**
**D-3200 Hildesheim(DE)**
Erfinder: **Biere, Dietmar, Dr.**
**Magdalenenweg 27**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Schaltungsanordnung zur Schätzung von Bewegung in einem aufgenommenen Bild.**

(57) Bei einer Schaltungsanordnung zur Schätzung von Bewegung in einem aufgenommenen Bild, wobei durch die Aufnahme entstehende Videosignale in mindestens einen Bildspeicher eingeschrieben und anschließend einer blockweisen datenreduzierenden Codierung unterworfen werden und wobei zur Schätzung der Bewegung jeweils ein Block eines Bildes mit Vergleichsblöcken in einem Suchfeld eines vorangegangenen Bildes verglichen wird, ist für den jeweils zu vergleichenden Block ein erster Zwischenspeicher und für das entsprechende Suchfeld des vorangegangenen Bildes mindestens ein zweiter Zwischenspeicher vorgesehen. Der zweite Zwischenspeicher besteht aus zwei Schreib/Lese-Speichern, wobei in den jeweils einen Daten aus dem Bildspeicher eingeschrieben und aus dem jeweils anderen Daten ausgelesen werden.

Fig. 1

## Schaltungsanordnung zur Schätzung von Bewegung in einem aufgenommenen Bild

Die Erfindung geht aus von einer Schaltungsanordnung nach der Gattung des Hauptanspruchs.

Zur Übertragung von bewegten Bildern, beispielsweise beim Schmalband-Bildtelefon, sind ver-schiedene datenreduzierende Codierverfahren be-kannt geworden. Eine wesentliche Datenreduzie-rung wird durch eine DPCM in der Zeitebene verbunden mit einer diskreten Cosinus-Transformation erzielt. Bei der diskreten Cosinus-Transformation werden die zu übertragenden Videosignale blockweise codiert, wobei ein Block beispielsweise aus 16 mal 16 Bildelementen besteht. Eine weitere Reduzierung der zu übertragenen Datenmenge kann dadurch erreicht werden, daß beim Auslesen der Daten aus dem für die DPCM erforderlichen Prädiktionsspeicher eine im Bild stattgefundene Bewegung berücksichtigt wird. Es wird für jeweils einen Block ein Bewegungsvektor ermittelt, welcher der Größe und Richtung der Bewegung dieses Blocks im Verhältnis zu einem vergleichbaren Block des vorangegangenen Bildes im wesentlichen entspricht.

Aufgabe der vorliegenden Erfindung ist es, eine Schaltungsanordnung anzugeben, bei welcher die im Bild vorliegende Bewegung geschätzt wird. Dabei soll die Schätzung der Bewegung durch Vergleich jeweils eines Blocks mit einem Suchfeld des vorangegangenen Bildes erfolgen.

Die erfindungsgemäße Schaltungsanordnung mit den kennzeichnenden Merkmalen hat den Vorteil, daß die Schätzung der Bewegung, insbesondere die Bildung der eingangs erwähnten Bewe-gungsvektoren, trotz eines erheblichen Rechenauf-wands innerhalb der zur Codierung eines Blocks erforderlichen Zeit erfolgen kann.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild einer Sendeeinrichtung für ein Schmalband-Bildtelefon,

Fig. 2 schematische Darstellungen eines Blocks und eines Suchfeldes sowie eines Beispiels für eine Suchstrategie,

Fig. 3 ein Blockschaltbild eines Ausführungsbeispiels,

Fig. 4 ein detaillierteres Blockschaltbild eines Suchfeldspeichers,

Fig. 5 ein detaillierteres Blockschaltbild eines in dem Ausführungsbeispiel verwendeten Rechenwerks,

Fig. 6 verschiedene Darstellungen zur Erläuterung der Ableitung der Adressen zum Auslesen der Vergleichsblöcke und

Fig. 7 ein Blockschaltbild eines Programmsteuerwerks mit einer arithmetischen Logikeinheit.

Gleiche Teile sind in den Figuren mit gleichen Bezugszeichen versehen.

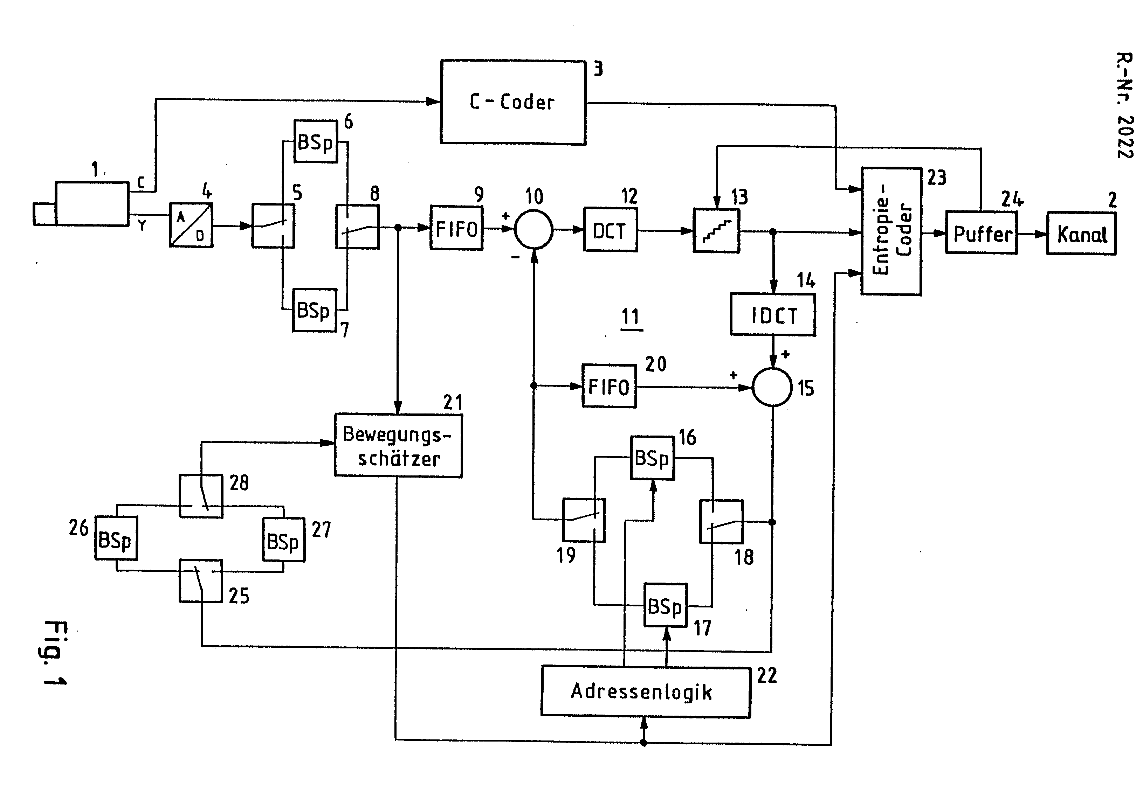

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-Codierung vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal ei-nes gespeicherten Bildes - blockweise transfor-miert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blöcke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwelle mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Dazu werden dem Bewegungsschätzer 21 Signale jeweils eines Bildes aus den Bildspeichern 6, 7 zugeführt, während Signale aus dem vorangegangenen Bild mit Hilfe der Bildspeicher 26, 27 und der Umschalter 25, 28 bereitgestellt werden. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

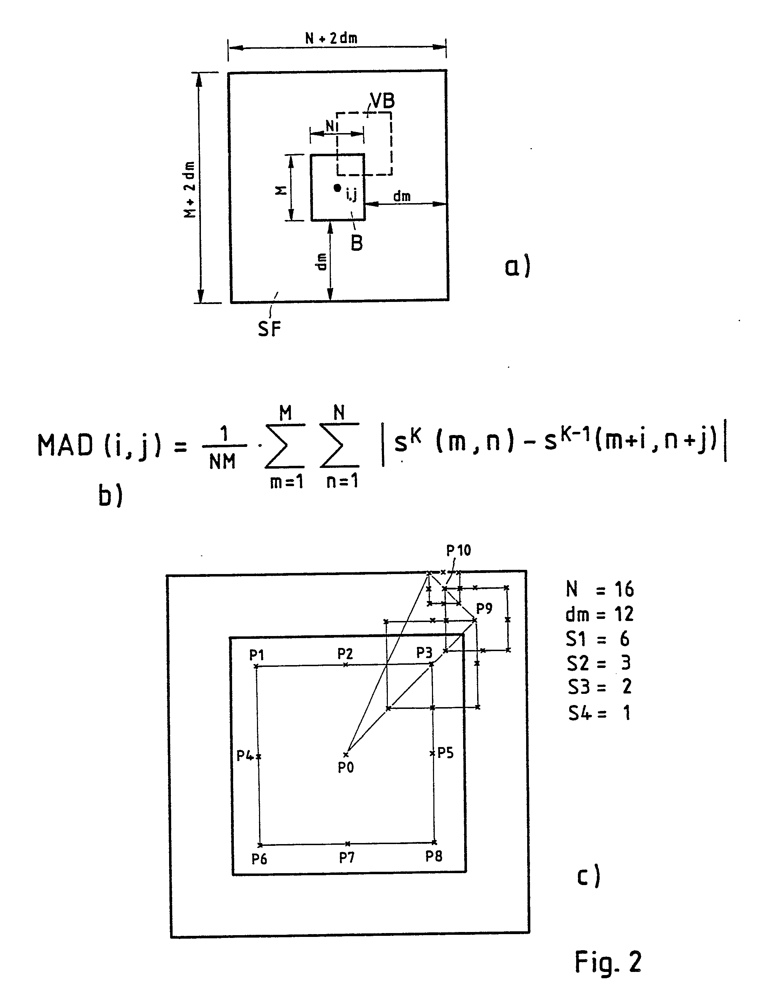

Das kleinere Rechteck in Fig. 2a) stellt einen jeweils zu codierenden Block B im k-ten Bild dar. Der Block B besteht aus MxN Bildelementen. Bei einem praktisch ausgeführten Beispiel sind M und N jeweils 16. Zum Vergleich der Position dieses Blocks mit einem vergleichbaren Block (Vergleichsblock VB) des vorangegangenen, (k-1)-ten Bildes wird aus dem Bildspeicher 6 bzw. 7 (Fig. 1) ein Suchfeld SF ausgelesen, das in beiden Richtungen um eine Anzahl dm Bildelemente größer ist als ein Block. Diese Anzahl ergibt sich aus der größten Bewegung zwischen zwei aufeinanderfolgenden Bildern, welche mit der erfindungsgemäßen Schaltung noch erfaßt werden soll. Das Suchfeld SF weist demnach Abmessungen von N+2dm und M+2dm auf. Bei der in Fig. 2a) dargestellten mittleren Lage des Blocks B im Suchfeld SF wird der Block mit dem Vergleichsblock VB des vorangegangenen Bildes verglichen. Die Koordinaten i, j stellen Abweichungen von dieser Position dar.

Als Maß für die Abweichung zwischen zwei zu vergleichenden Blöcken bzw. zwischen dem Block des aktuellen Bildes und einem entsprechenden Teil des Suchfeldes wird der Mittelwert der absoluten Bilddifferenz (MAD) verwendet. Dieser folgt der Gleichung, welche in Fig. 2b) dargestellt ist. m und n sind jeweils die Koordinaten der Bildelemente innerhalb eines Blocks B, s bedeutet das zu dem Bildelement gehörende Signal, wobei die Hochzahl k auf das k-te Bild und die Hochzahl k-1 auf das vorangegangene Bild hinweist.

Mit der erfindungsgemäßen Schaltungsanordnung wird der Wert für MAD jeweils für verschiedene Positionen des Blocks innerhalb des Suchfeldes SF gebildet. Aus einem Minimum dieses Wertes wird geschlossen, daß sich der Block B des k-ten Bildes im (k-1)-ten Bild an der entsprechenden Stelle des Suchfeldes befunden hat, also von dieser Stelle zu der Position des Blocks im k-ten Bild bewegt wurde.

Zur Ermittlung dieses Minimums sind verschiedene schrittweise Suchmethoden möglich, wovon eine - nämlich eine Vier-Schritt-Methode - in Fig. 2c) schematisch dargestellt ist. In einem ersten Schritt wird der Wert MAD für den Mittelpunkt P0, was keiner Bewegung entsprechen würde, und für die auf einem Rechteck um den Punkt P0 liegenden Punkte P1 bis P8 errechnet. Bei dem in Fig. 2c) dargestellten Beispiel ergibt die durch den Punkt P3 gekennzeichnete Position des Blocks den geringsten Wert MAD gegenüber den Punkten P0 bis P2 und P4 bis P8. Deshalb werden ausgehend von Punkt P3 weitere Werte für MAD bei Punkten ermittelt, welche horizontal, vertikal und in beiden Richtungen um einen Abstand von drei Bildpunkten von P3 entfernt sind. Dieser Schritt ergibt ein Minimum von MAD beim Punkt P9, von welchem ausgehend der dritte Schritt eine Ermittlung von MAD bei Punkten beinhaltet, die jeweils um zwei Bildpunkte entfernt sind.

Bei Punkt P10 ergibt sich wiederum ein Minimum, worauf die benachbarten Punkte zur weiteren Suche verwendet werden.

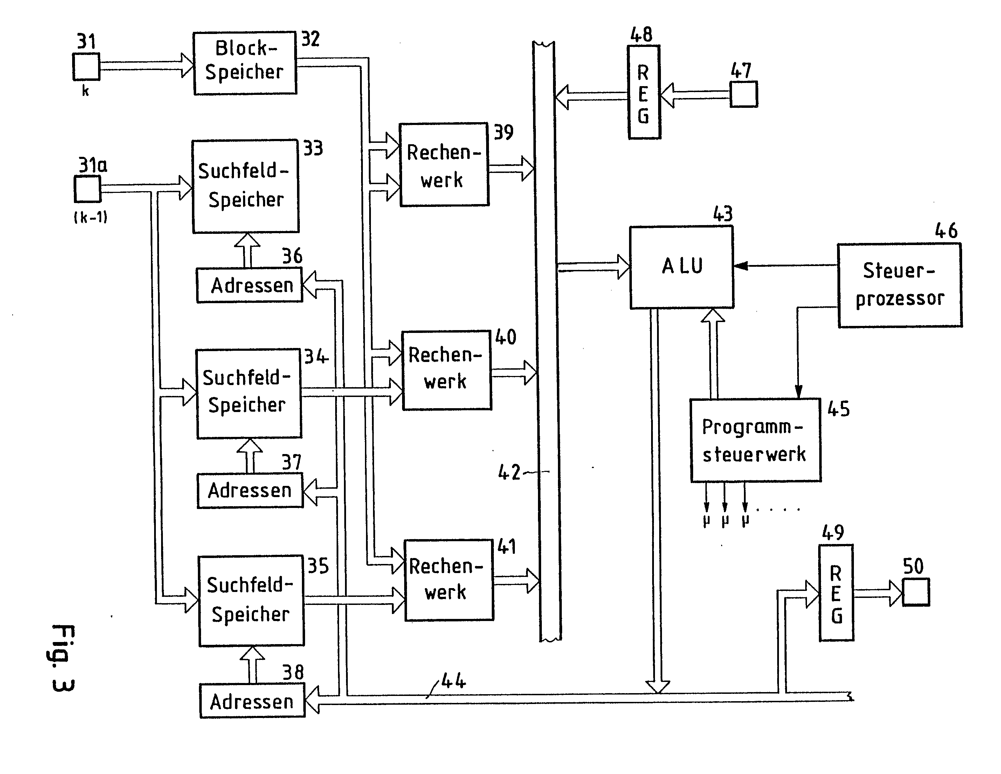

Bei dem Ausführungsbeispiel gemäß Fig. 3 werden die aus jeweils einem der Bildspeicher 6, 7 (Fig. 1) ausgelesenen Daten über einen Eingang 31 einem ersten Zwischenspeicher 32 und aus jeweils einem der Bildspeicher 26, 27 ausgelesenen Daten über einen weiteren Eingang 31a drei zweiten Zwischenspeichern 33, 34, 35 zugeführt. Der erste Zwischenspeicher 32 dient zur Speicherung eines Blocks und wird daher im folgenden Blockspeicher genannt. Die Zwischenspeicher 33 bis 35 nehmen jeweils die Daten der Suchfelder auf und werden daher im folgenden als Suchfeldspeicher bezeichnet. Jedem Suchfeldspeicher 33 bis 35 ist ein Adressengenerator 36 bis 38 zugeordnet, der die für die im Zusammenhang mit Fig. 2 beschriebene Suchstrategie erforderlichen Adressen erzeugt. Ein unter Benutzung dieser Adressen aus einem der Suchfeldspeicher 33 bis 35 ausgelesener Vergleichsblock wird mit Hilfe von Rechenwerken 39 bis 41 mit dem aus dem Blockspeicher 32 ausgelesenen Block verglichen.

Durch die Zwischenspeicherung des Suchfeldes wird eine schnelle Abarbeitung der in Fig. 2 beschriebenen Suchschritte erzielt, da bei den Suchfeldspeichern nur auf relativ wenig Adressen zuzugreifen ist. Außerdem sind mehrere Suchfeldspeicher vorgesehen, so daß gleichzeitig Vergleichsblöcke in unterschiedlichen Lagen aus den Suchfeldspeichern 33 bis 35 ausgelesen und in den Rechenwerken 39 bis 41 mit dem jeweiligen Block verglichen werden können. Schließlich erfolgt eine weitere wesentliche Erhöhung der Verarbeitungsgeschwindigkeit dadurch, daß gemäß einer Weiterbildung der Erfindung die Suchfeldspeicher 33 bis 35 als sogenannte Cache-Speicher ausgeführt sind, wobei jeweils ein Schreib/Lese-Speicher (RAM) abwechselnd zum Einschreiben oder zum Auslesen betrieben wird.

Die von den Rechenwerken 39 bis 41 ermittelten MAD-Werte gelangen über einen Datenbus 42 zu einer arithmetischen Logikeinheit 43 (ALU), in welcher aus den von den Rechenwerken 39 bis 41 abgegebenen MAD-Werten der jeweils kleinste ermittelt wird. Entsprechend der im Zusammenhang mit Fig. 2 erläuterten Suchstrategie werden von der ALU 43 Adressen für das Auslesen weiterer Vergleichsblöcke aus den Suchfeldspeichern 33 bis 35 über einen Adressenbus 44 an die Adressengeneratoren 36 bis 38 gegeben.

Ein Programmsteuerwerk 45 steuert den zeitlichen Ablauf der einzelnen Verarbeitungsschritte und führt den einzelnen Schaltungen entsprechende Mikrobits $\mu$ zur Steuerung zu. Das Programmsteuerwerk 45 kann in vorteilhafter Weise mit einem Mikroprogrammsteuerwerk aufgebaut sein. Von einem Steuerprozessor 46, der an sich nicht Bestandteil der Schaltungsanordnung zur Bewegungsschätzung ist, können verschiedene Vorgaben der Schaltung nach Fig. 3 zugeführt werden. So ist es beispielsweise möglich, die Suchstrategie oder die Größe des Suchfeldes vorzugeben. Die Größe des Suchfeldes ist jedoch durch die Kapazität der Suchfeld-Speicher 33 bis 35 begrenzt. Ein Mittelwert der absoluten Bilddifferenz (MAD), der kleiner als ein vorgebbarer Minimalwert T ist, führt nicht zur Ermittlung eines Bewegungsvektors. Der vorgebbare Minimalwert T wird über einen Eingang 47, ein Register 48 und den Datenbus 42 der ALU 43 zugeführt. Die jeweils für einen Block ermittelten Komponenten MVX und MVY des Bewegungsvektors werden von der ALU 43 über den Adressenbus 44 einem Register 49 zugeführt und stehen an dessen Ausgang 50 zur weiteren Verarbeitung zur Verfügung.

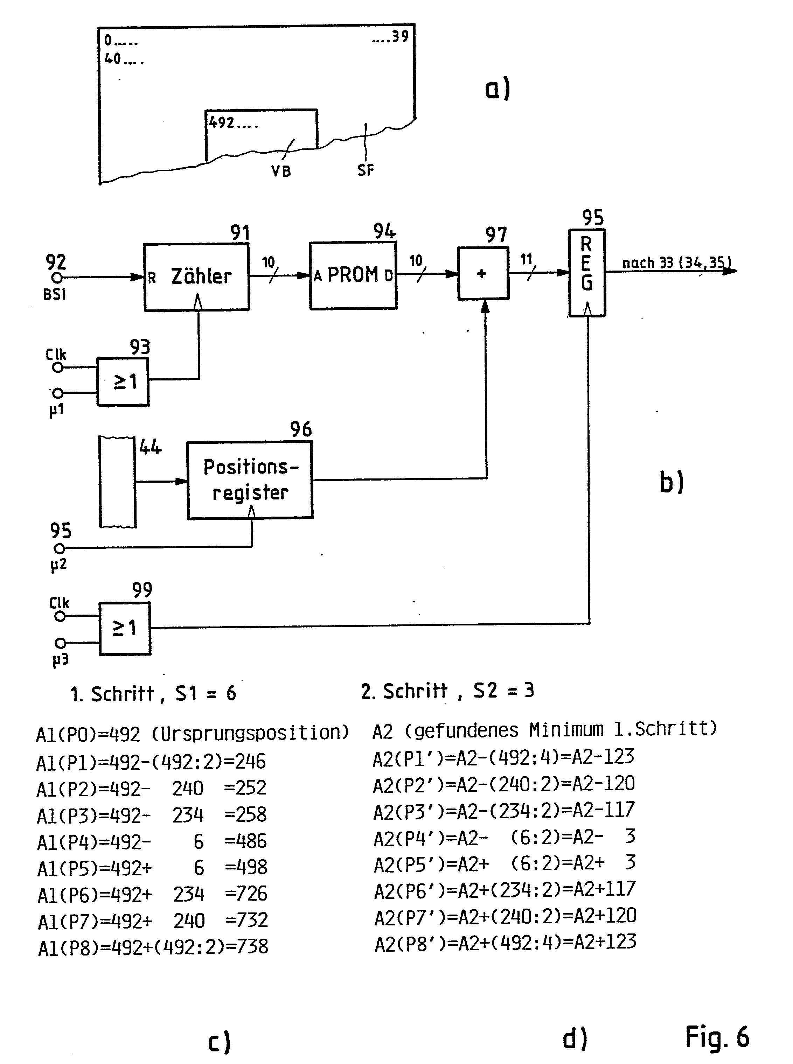

Fig. 4 zeigt einen der Suchfeldspeicher 33 bis 35 in detaillierter Darstellung. Dabei sind zwei Schreib/Lese-Speicher 51, 52 vorgesehen, die abwechselnd beschrieben bzw. ausgelesen werden. Die Daten-Ein/Ausgänge D können entweder über Bustreiber 53, 54 an einen Eingang 55 oder über Bustreiber 56, 57 an einen Ausgang 58 angeschlossen werden. Dem Eingang 55 sind von den Bildspeichern 6, 7 (Fig. 1) Bilddaten zuführbar. Der Ausgang 58 ist an den Eingang eines der Rechenwerke 39 bis 41 (Fig. 3) angeschlossen. Zur Zuführung der 11 Bit breiten Adressen sind ebenfalls Bustreiber 59, 60, 61, 62 vorgesehen, die die Adresseneingänge A der Schreib/Lese-Speicher 51, 52 wahlweise mit einem Eingang 63 oder mit einem Eingang 64 verbinden. Der Eingang 63 wird von einem nicht dargestellten Adressengenerator, der im Zusammenhang mit den Bildspeichern 6, 7 steht, mit Einschreibadressen versorgt. Dem Eingang 64 sind die von einem der Adressengeneratoren 36 bis 38 erzeugten Adressen zuführbar. Nähere Erläuterungen zu diesen Adressen erfolgen später im Zusammenhang mit Fig. 6.

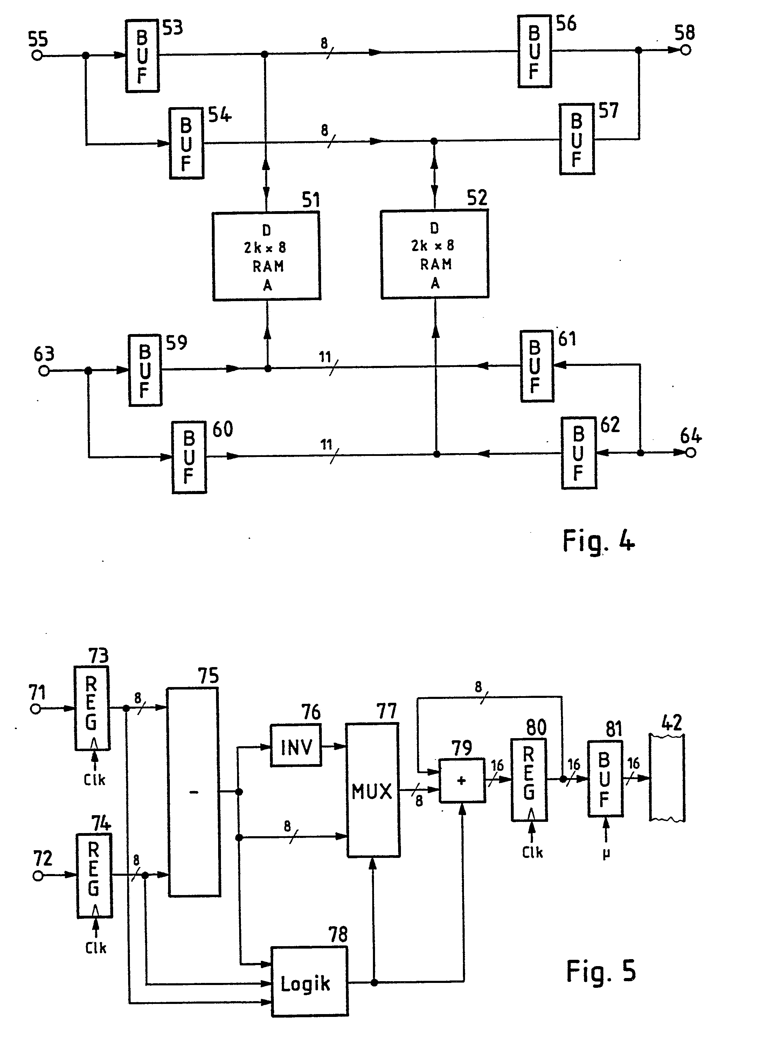

Zunächst wird jedoch ein Beispiel für eines der Rechenwerke 39 bis 41 (Fig. 3) anhand von Fig. 5 erläutert. Die Eingänge 71, 72 sind mit Ausgängen des Blockspeichers 32 und eines der Suchfeldspeicher 33 bis 35 verbunden. Die Daten jeweils eines Bildelementes werden mit Hilfe der Register 73, 74 in das Rechenwerk eingetaktet und einer Subtrahierschaltung 75 zugeführt. Entsprechend der in Fig. 2b) angegebenen Gleichung wird danach der Absolutwert der Differenz gebildet. Dieses erfolgt mit Hilfe eines Invertierers 76 und eines Multiplexers 77, der von einer Logikschaltung 78 gesteuert wird. Der Logikschaltung 78 werden die Eingangssignale und das Ausgangssignal der Subtrahierschaltung zugeführt. Je nach Vorzeichen der Differenz wird vom Multiplexer der invertierte oder der nichtinvertierte Wert der Differenz an eine Addierschaltung 79 weitergeleitet, die zusammen mit einem Register 80 als Akkumulator geschaltet ist. Entsprechend der in Fig. 2b) angegebenen Formel werden die Absolutwerte der Differenzen über alle Bildelemente jeweils eines Blocks aufintegriert.

Die gemäß der Formel vorgesehene Division durch NxM kann unterbleiben, da sich die Abmessungen der Blöcke mindestens während eines Suchvorgangs nicht ändern.

Über einen weiteren Bustreiber 81, dem vom Programmsteuerwerk 45 (Fig. 3) ein entsprechendes Mikrobit zugeführt wird, wird der ermittelte Wert MAD an den Datenbus 42 abgegeben.

Wie bereits erwähnt, kommt dem schnellen Auslesen aus den Suchfeldspeichern eine wesentliche Bedeutung zu. Im folgenden wird deshalb unter Bezugnahme auf die anhand von Fig. 2 erläuterte Suchstrategie eine vorteilhafte Adressierung der Suchfeldspeicher erläutert. Dabei veranschaulicht Fig. 6a) die Zuordnung der Adressen zu den Bildelementen jeweils eines Suchfeldes. Unter jeweils 40 Adressen (beispielsweise 0 bis 39) werden die Bildelemente jeweils einer Zeile des Suchfeldes gespeichert. Zur Kennzeichnung der jeweiligen Position eines Vergleichsblocks VB innerhalb des Suchfeldes SF dient im Gegensatz zur Darstellung in Fig. 2a) die Adresse der linken oberen Ecke des Vergleichsblocks VB. Diese beträgt 492 bei der mittleren Position, die jeweils bei einem Suchvorgang als Ursprungsposition für den ersten Schritt verwendet wird. Zum Auslesen der Daten des Vergleichsblocks VB in der Ursprungsposition wird mit der Adresse 492 begonnen und die Adresse 15 mal um jeweils 1 inkrementiert, bis das Bildelement an der rechten oberen Ecke des Vergleichsblocks erreicht ist. Dann erfolgt ein Sprung um 24 und weitere Inkrementierungen um 1, so daß die nächste Zeile des Vergleichsblocks ausgelesen wird usw.

Bei dem in Fig. 6b) dargestellten Ausführungsbeispiel für einen Adressengenerator wird ein Zähler 91 durch einen bei 92 zugeführten Impuls BSI rückgesetzt. Dieser Blockstartimpuls tritt jeweils zu Beginn der Verarbeitung eines Blocks B auf. Der Zähler 91 wird von einem Taktsignal Clk getaktet, jedoch nur während derjenigen Zeit, während der vom Schrittsteuerwerk 45 (Fig. 3) ein Mikrobit $\mu 1$ erzeugt wird. Dazu werden beide Signale über eine Oder-Schaltung 93 dem Takteingang des Zählers 91 zugeführt. Mit Hilfe einer in einem Nur-Lesespeicher (PROM) 94 abgelegten Tabelle wird die vom Zähler 91 erzeugte Adresse derart umcodiert, daß nach der Ausgabe von jeweils 16 Adressen die folgenden 16 Adressen um jeweils 40 höher sind. Über den Adressenbus 44 wird die Position des jeweils auszulesenden Vergleichsblocks in ein Positionsregister geschrieben, welches von einem bei 95 zugeführten Mikrobit $\mu 2$ getaktet wird. Dem Inhalt des Positionsregisters 96 wird in einer Addierschaltung 97 die jeweils vom PROM 94 ausgegebene Adresse hinzuaddiert. Über ein Register 98 wird die somit erzeugte Ausleseadresse dem Eingang 64 des Suchfeldspeichers zugeführt. Damit die Übergabe der Adresse an den Suchfeldspeicher zum richtigen Zeitpunkt erfolgt, werden ein Taktsignal Clk und ein vom Programmsteuerwerk 45 abgegebenes Mikrobit $\mu 3$ in einer Oder-Schaltung 99 verknüpft und dem Register 98 als Taktsignal zugeführt.

Die Figuren 6c) und 6d) zeigen die Berechnung von Adressen für die ersten beiden Schritte des in Fig. 2c) dargestellten Suchverfahrens. Beim ersten Schritt (Fig. 6c)) beträgt die Schrittweite S1 = 6, während beim zweiten Schritt S2 = 3 ist. In Fig. 6c) sind die Adressen A1.. durch die gleichlautende Bezeichnung der jeweiligen Punkte in Fig. 2c) indiziert. Beim zweiten Schritt werden ebenfalls acht Punkte (P1' bis P8') verarbeitet, die in entsprechender Weise um das gefundene Minimum auf den Seiten bzw. Ecken eines Quadrats liegen.

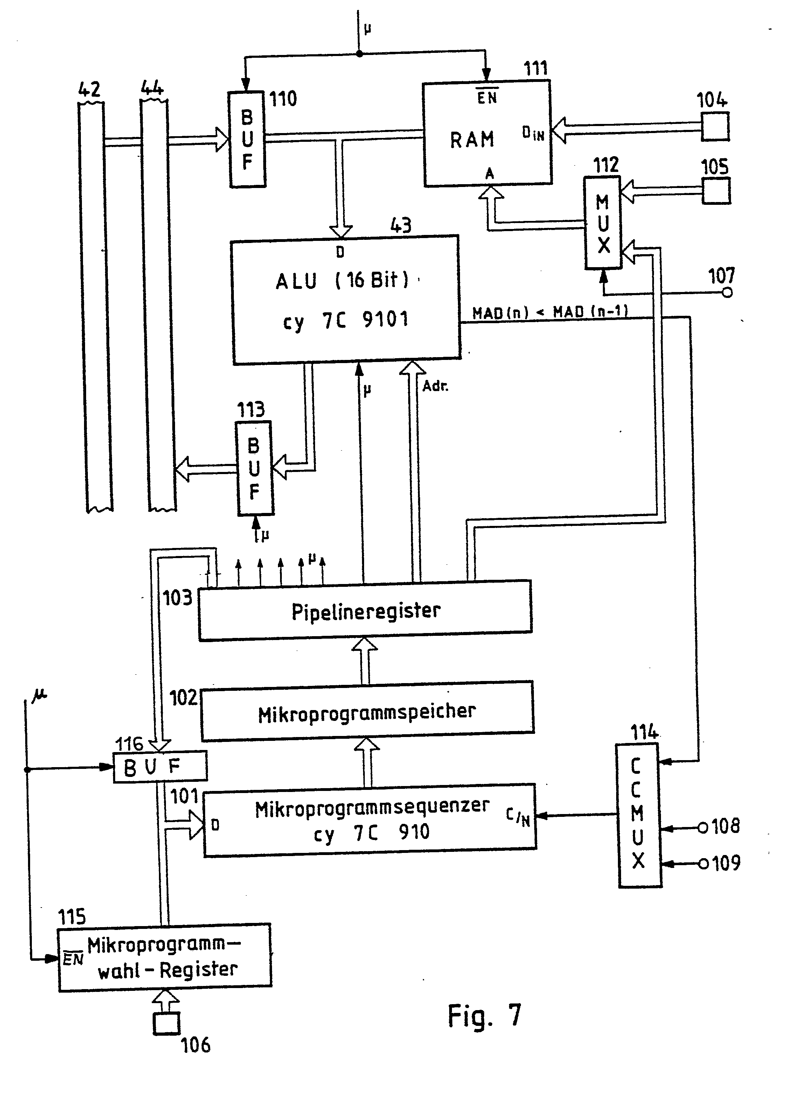

Fig. 7 zeigt die arithmetische Logikeinheit 43 und das Programmsteuerwerk 45 (Fig. 1). Das Programmsteuerwerk 45 wird im wesentlichen von einem Mikroprogrammsequenzer 101, einem Mikroprogrammspeicher 102 und einem Pipelineregister 103 gebildet, welche als integrierte Schaltkreise auf dem Markt erhältlich sind. In dem Mikroprogrammspeicher 102 ist ein Programm abgelegt, welches das Pipelineregister 103 veranlaßt, Mikrobits $\mu$ an die einzelnen Schaltungen abzugeben. Außerdem werden Mikrobits den Bustreibern 110 und 113 sowie der ALU 43 zugeleitet. Dem Pipelineregister wird ferner jeweils die Adresse des folgenden Programmschrittes entnommen und dem Eingang D des Mikroprogrammsequenzers 101 zugeführt. In die entsprechende Datenleitung ist ein Bustreiber 116 eingefügt, der invers mit dem Ausgang eines Mikroprogrammwahl-Registers 115 gesteuert wird.

Über Eingänge 104, 105 und 106 ist die Schaltung nach Fig. 7 mit dem Steuerprozessor 46 (Fig. 3) verbunden. Über einen, dem Mikroprogrammsequenzer 101 zugeordneten Condition-Code-Multiplexer 114 können Programmunterbrechungen (Interrupts) und Programmsprünge ausgelöst werden. Ein Eingang des Condition-Code-Multiplexers 114 ist mit einem Ausgang der ALU 43 verbunden, während zwei weitere Eingänge 108, 109 für Programmunterbrechungen genutzt werden. Ein Schreib/Lese-Speicher (RAM) enthält Festwerte für die Adressenberechnung. Über einen Multiplexer 112 kann der Schreib/Lese-Speicher 111 entweder über den Eingang 105 vom Steuerprozessor 46 (Fig. 3) oder vom Pipelineregister 103 adressiert werden. Der Multiplexer 112 wird über den Eingang 107 gesteuert. Über das Register 115 können verschiedene Programme des Mikroprogrammsequenzers 101 angesprochen werden.

Nach dem Einschalten wird über den Eingang 107 ein Startsignal zugeführt, das den Multiplexer 112 vorübergehend mit dem Steuerprozessor 46 verbindet, dieser legt daraufhin unter vorgegebenen Adressen im Schreib/Lese-Speicher 111 Daten ab, die einer jeweils gewählten Suchstrategie entsprechen. Ferner wählt der Steuerprozessor 46 über den Eingang 106 und das Register 115 eines von mehreren Programmen aus. Mit dieser Steuerung durch den Steuerprozessor 46 kann die erfindungsgemäße Schaltungsanordnung jeweils an verschiedene Gegebenheiten - beispielsweise die Art der zu übertragenden Bilder -angepaßt werden. Es ist jedoch durchaus im Rahmen der Erfindung möglich, auf diese Weiterbildung zu verzichten und anstelle des Schreib/Lese-Speichers 111 einen Festwertspeicher und/oder im Mikroprogrammspeicher 102 ein festeingestelltes Programm vorzusehen.

Im Rahmen einer nach dem Einschalten ablaufenden Startroutine wird ferner über den Eingang 108 eine Programmunterbrechung ausgelöst, die einen Start des Mikroprogrammsequenzers 101 an einer vorgegebenen Adresse zur Folge hat.

Die im folgenden erläuterten Verfahrensschritte werden jeweils für einen Block durchgeführt, wozu über einen Eingang 109 der Mikroprogrammsequenzer 101 ebenfalls auf die vorgegebene Startadresse gesetzt wird. Durch ein Mikrobit $\mu$ gesteuert wird dem Dateneingang D der ALU 43 entweder über den Bustreiber 110 vom Datenbus 42 ein MAD-Wert oder aus dem Schreib/Lese-Speicher 111 die Adresse (Position) des jeweiligen Vergleichsblocks zugeführt. Letztere wird aus Festwerten berechnet, die aus dem Schreib/Lese-Speicher 111 unter einer Adresse ausgelesen werden, welche vom Pipelineregister 103 über den Multiplexer 112 dem Schreib/Lese-Speicher 111 zugeführt wird. Sowohl der MAD-Wert als auch die dazugehörige Position werden in der ALU 43 abgelegt.

Danach wird der nächste MAD-Wert über den Datenbus 42 und den Bustreiber 110 und die nächste Position aus dem Schreib/Lese-Speicher 111 in die ALU eingelesen. Beide MAD-Werte werden miteinander verglichen. Ist der zuletzt eingelesene MAD-Wert kleiner als der vorangegangene, so wird über den Condition-Code-Multiplexer 114 ein Sprung des Mikroprogrammsequenzers 101 ausgelöst. Dadurch wird ein Unterprogramm aktiviert, das ein Ablegen des neuen MAD-Wertes mit der zugehörigen Position in einem internen Speicher der ALU 43 bewirkt, wozu eine Adresse für den internen Speicher vom Pipelineregister 103 ausgegeben wird. Ist der neue MAD-Wert jedoch größer als der vorangegangene, so verbleibt der vorangegangene MAD-Wert einschließlich der dazugehörigen Position im internen Speicher.

Der Vergleich des jeweils neuen MAD-Wertes mit dem vorangegangenen sowie gegebenenfalls das Abspeichern der neuen Daten bewirkt, daß im internen Speicher der ALU 43 letztlich der kleinste MAD-Wert und die dazugehörige Position abgelegt ist. Wie bereits erwähnt, liegt die Position in Form einer Adresse beispielsweise des linken oberen Bildelementes eines Vergleichsblocks VB vor. Durch eine Differenzbildung mit der entsprechenden Adresse des Blocks B (Fig. 2) unter Berücksichtigung der Zeilenstruktur werden anschließend die Komponenten MVX und MVY des Bewegungsvektors errechnet. Dieses kann mit Hilfe einer entsprechenden Tabelle geschehen, in welcher die Komponenten MVX und MVY sowie die zugehörigen Adressen abgelegt sind. Über den Bustreiber 113, den Adressenbus 44, das Register 49 (Fig. 3) und den Ausgang 50 werden MVX und MVY ausgegeben.

Zur Ableitung des Bewegungsvektors für den folgenden Block wird über den Eingang 109 zunächst eine Programmunterbrechung ausgelöst. Danach werden wie bereits beschrieben die MAD-Werte für den folgenden Block von der ALU 43 ausgewertet und die Komponenten MVX und MVY ausgegeben.

## Ansprüche

1. Schaltungsanordnung zur Schätzung von Bewegung in einem aufgenommenen Bild, wobei durch die Aufnahme entstehende Videosignale in mindestens einen Bildspeicher eingeschrieben und anschließend einer blockweisen datenreduzierenden Codierung unterworfen werden und wobei zur Schätzung der Bewegung jeweils ein Block eines Bildes mit Vergleichsblöcken in einem Suchfeld eines vorangegangenen Bildes verglichen wird, dadurch gekennzeichnet, daß für den jeweils zu vergleichenden Block ein erster Zwischenspeicher und für das entsprechende Suchfeld des vorangegangenen Bildes mindestens ein zweiter Zwischenspeicher vorgesehen ist und daß der zweite Zwischenspeicher aus zwei Schreib/Lese-Speichern besteht, wobei in den jeweils einen Daten aus dem Bildspeicher eingeschrieben werden und aus dem jeweils anderen Daten ausgelesen werden.

2. Schaltungsanordnung nach Anspruch 1, dadurch gekennzeichnet, daß für jeweils einen zweiten Zwischenspeicher ein Rechenwerk vorgesehen ist, welchem die aus dem jeweiligen zweiten Zwischenspeicher und dem ersten Zwischenspeicher ausgelesenen Daten zuführbar sind.

3. Schaltungsanordnung nach Anspruch 1, dadurch gekennzeichnet, daß jeweils einem zweiten Zwischenspeicher ein Adressengenerator zugeordnet ist, der aus einer zugeführten Bezugsadresse diejenigen Adressen erzeugt und nacheinander dem jeweiligen zweiten Zwischenspeicher zuführt, welche einem jeweils ausgewählten Block innerhalb des Suchfeldes entsprechen.

4. Schaltungsanordnung nach Anspruch 3, dadurch gekennzeichnet, daß aus den zweiten Zwischenspeichern im wesentlichen gleichzeitig Daten von Blöcken ausgelesen werden, welche verschiedene Positionen innerhalb des Suchfeldes aufweisen und in den Rechenwerken mit den aus dem ersten Zwischenspeicher ausgelesenen Daten verglichen werden, daß ausgehend von derjenigen Position, bei welcher das Vergleichsergebnis bis dahin ein Minimum aufweist, wiederholt Daten von weiteren Vergleichsblöcken aus den zweiten Zwischenspeichern ausgelesen werden und daß aus der Position, bei welcher das Vergleichsergebnis letztlich ein Minimum aufweist, ein Bewegungsvektor abgeleitet wird.

5. Schaltungsanordnung nach Anspruch 1, dadurch gekennzeichnet, daß zum Erzeugen von Adressen zum Auslesen aus dem zweiten Zwischenspeicher ein Zähler vorgesehen ist, der pro Bildelement um 1 inkrementiert wird, daß der jeweilige Zählerstand einer Umcodierung derart unterworfen ist, daß nach einer Zahl von Inkrementierungen, die der Breite eines Blocks weniger 1 entspricht, als nächster Wert ein um die Zahl der Bildelemente einer Zeile des Suchfeldes minus der Breite eines Blocks plus 1 erhöhter Zählerstand weitergeleitet wird, und daß der umcodierte Zählerstand um eine die Position des Vergleichsblocks im Suchfeld darstellende Adresse erhöht wird.

6. Schaltungsanordnung nach Anspruch 1, dadurch gekennzeichnet, daß zur Steuerung des zeitlichen Ablaufs ein Mikroprogrammsteuerwerk vorgesehen ist.

R.-Nr. 2022

Fig. 1

R.- Nr. 2022

a)

$$MAD(i,j) = \frac{1}{NM} \cdot \sum_{m=1}^{M} \sum_{n=1}^{N} \left| s^K(m,n) - s^{K-1}(m+i,n+j) \right|$$

b)

N = 16
dm = 12
S1 = 6
S2 = 3
S3 = 2
S4 = 1

c)

Fig. 2

R.- Nr. 2022

Fig. 3

R.- Nr. 2022

Fig. 4

Fig. 5

R.- Nr. 2022

**a)**

**b)**

| | |
|---|---|
| 92 BSI | 91 R Zähler |
| | 94 A PROM D |
| | 97 + |
| | 95 REG nach 33 (34,35) |

93 Clk / µ1  ≥1

44  96 Positions-register

95 µ2

99 Clk / µ3  ≥1

**c)**

1. Schritt , S1 = 6

A1(P0)=492 (Ursprungsposition)
A1(P1)=492-(492:2)=246
A1(P2)=492-  240  =252
A1(P3)=492-  234  =258
A1(P4)=492-    6  =486
A1(P5)=492+    6  =498
A1(P6)=492+  234  =726
A1(P7)=492+  240  =732
A1(P8)=492+(492:2)=738

**d)**

2. Schritt , S2 = 3

A2 (gefundenes Minimum 1.Schritt)
A2(P1')=A2-(492:4)=A2-123
A2(P2')=A2-(240:2)=A2-120
A2(P3')=A2-(234:2)=A2-117
A2(P4')=A2-  (6:2)=A2-  3
A2(P5')=A2+  (6:2)=A2+  3
A2(P6')=A2+(234:2)=A2+117
A2(P7')=A2+(240:2)=A2+120
A2(P8')=A2+(492:4)=A2+123

Fig. 6

R. Nr. 2022

Fig. 7